# EUROPEAN PATENT APPLICATION

(11) **EP 4 489 046 A1**
(43) Date of publication of application: **08.01.2025**
(21) Application number: 23760126.5
(22) Date of filing: 24.02.2023
(51) Int. Cl.: H01H 13/14, C03C 21/00

(54) **SWITCH DEVICE**

(30) Priority: 28.02.2022 JP 2022029745
(71) Applicant: Nitto Denko Corporation, Ibaraki-shi, Osaka 567-8680 (JP)
(72) Inventor: MURASHIGE, Takeshi, Ibaraki-shi, Osaka 567-8680 (JP); HINO, Takafumi, Ibaraki-shi, Osaka 567-8680 (JP)
(74) Representative: Hoffmann Eitle
(86) International application number: PCT/JP2023/006840
(87) International publication number: WO 2023/163128

(57) **Abstract**

The present switch device includes a glass layer made of tempered glass and a switch portion arranged at the back surface of the glass layer. The thickness of the glass layer is 100 um or more and 200 um or less. The switch portion includes a plurality of contacts that include a vertically movable contact. In response to pressing of the glass layer, the glass layer elastically deforms, thereby performing switching of the plurality of contacts between being in a conductive state and in a non-conductive state.

## Description

### TECHNICAL FIELD

The present invention relates to a switch device.

### BACKGROUND ART

As a method of installing electronic components, many switches for mechanically controlling electrical contact are used. An example of such a switch is a tact switch as disclosed in Patent Document 1. Since an operator can recognize an on/off state in such a slide-type button, it is considered that there is an advantage of avoiding misoperation when compared with a touch-type switch.

Among the switches of this type, a vertically sliding switch including a vertically movable contact uses a flexible resin which is hard to break at the outermost top surface of the switch. However, a surface of the resin tends to deteriorate due to scratches, etc., it is difficult to be cleaned by solvents, etc., the texture is not preferable, and the strength is not sufficient. Therefore, a switch device to eliminate these issues is required.

### RELATED ART DOCUMENTS

### PATENT DOCUMENTS

Patent Document 1: Japanese Laid-Open Patent Application No. 1994-203679

### SUMMARY OF THE INVENTION

### PROBLEM TO BE SOLVED BY THE INVENTION

An object of the present invention is to provide a switch device including a vertically movable contact, the switch device being enhanced in scratch resistance, solvent cleanability, and texture, and having sufficient strength.

### MEANS FOR SOLVING THE PROBLEMS

The present switch device includes a glass layer made of tempered glass and a switch portion arranged at the back surface of the glass layer. The thickness of the glass layer is 100 um or more and 200 um or less. The switch portion includes a plurality of contacts that include a vertically movable contact. In response to pressing of the glass layer, the glass layer elastically deforms, thereby performing switching of the plurality of contacts between being in a conductive state and in a non-conductive state.

### ADVANTAGEOUS EFFECTS OF THE INVENTION

According to the disclosed technique, a switch device including a vertically movable contact is enhanced in scratch resistance, solvent cleanability, and texture, and can have sufficient strength.

### BRIEF DESCRIPTION OF THE DRAWINGS

[FIG. 1] FIG. 1 is a cross-sectional view (No. 1) illustrating a switch device according to a first embodiment.
[FIG. 2] FIG. 2 is a plan view illustrating a frame of the switch device according to the first embodiment.
[FIG. 3] FIG. 3 is a cross-sectional view (No. 2) illustrating the switch device according to the first embodiment.
[FIG. 4] FIG. 4 is a diagram illustrating conditions and results of examples and comparative examples.

### DETAILED DESCRIPTION OF THE INVENTION

Hereinafter, an embodiment for implementing the invention will be described with reference to the drawings. In each drawing, the same components may be denoted by the same reference numerals and duplicate descriptions may be omitted.

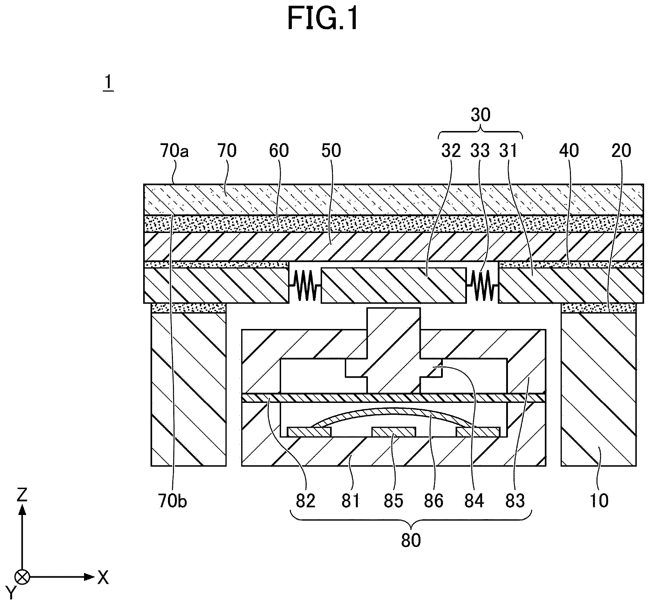

FIG. 1 is a cross-sectional view (No. 1) illustrating a switch device according to a first embodiment. As illustrated in FIG. 1, a switch device 1 includes a support 10, a bonding layer 20, a frame 30, a bonding layer 40, a resin layer 50, a bonding layer 60, a glass layer 70, and a switch portion 80. Note that the support 10, the frame 30, the bonding layer 40, the resin layer 50, and the bonding layer 60 are not essential components of the switch device 1.

One surface of the glass layer 70, a surface 70a, is an outermost top surface of the switch device 1. Other members such as the support 10 and other layers are arranged on the other surface 70b (back surface) of the glass layer 70. The switch device 1 is mounted on a wiring board, for example.

Here, for example, materials of the components of the switch device 1 will be described.

### [Support]

The support 10 is arranged on the other surface 70b (back surface) of the glass layer 70 and supports the glass layer 70 or the like. For example, the support 10 can be arranged like a frame surrounding the switch portion 80, on the outside of the switch portion 80. Alternatively, a plurality of the supports 10 may be arranged with intervals at any positions on the outside of the switch portion 80. The supports 10 are formed of, for example, a resin or a metal.

The components constituting the switch portion 80 may be used as the supports. Alternatively, the switch portion 80 itself may be used as the support. That is, the support may be a part or all of the switch portion 80. In these cases, the support 10 as illustrated in FIG. 1 need not be arranged. Alternatively, a part or all of the switch portion 80 may be used as the support, and separately, the support 10 as illustrated in FIG. 1 may be additionally arranged.

### [Bonding layer]

Any adhesive or bonding agent can be used as the bonding layers 20, 40, and 60. As used herein, an adhesive is a layer that is adhesive at ambient temperature and adheres to an adherend with slight pressure. Therefore, the adhesive retains practical adhesive strength even when the adherend attached to the adhesive is removed. On the other hand, a bonding agent is a layer that can bind substances by being interposed therebetween. Therefore, when the adherend attached to the bonding agent is removed, the bonding agent has no practical adhesive force.

Examples of the adhesive include an acrylic polymer, a silicone polymer, a polyester, a polyurethane, a polyamide, a polyether, and an adhesive based on a polymer such as fluorine or rubber.

Examples of the bonding agent include a polyester bonding agent, a polyurethane bonding agent, a polyvinyl alcohol bonding agent, and an epoxy bonding agent. In a case where the bonding agent is a thermosetting bonding agent, the peeling resistance can be exerted by heating and curing (solidifying). In a case where the bonding agent is a photocurable bonding agent such as of an ultraviolet curing type, the peeling resistance can be exerted by curing by irradiating light such as ultraviolet rays. In a case where the bonding agent is a moisture-curing bonding agent, the peeling resistance can be exerted by curing by reacting with moisture or the like in the air. Thus, the peeling resistance can also be exerted by curing by leaving the moisture-curing bonding agent as is.

From the viewpoint of strength, it is preferable to use a bonding agent or an adhesive as the bonding layer 20, an adhesive as the bonding layer 40, and a bonding agent as the bonding layer 60. The thickness of the bonding layer 20 is preferably within a range of 5 um to 2 mm. The thickness of the bonding layer 40 is preferably 5 um or more and 200 um or less, more preferably 20 um or more and 150 um or less, and furthermore preferably 20 um or more and 100 um or less. The thickness of the bonding layer 60 is preferably 0.5 um or more and 25 um or less, more preferably 0.5 um or more and 5 um or less, and further preferably 0.5 um or more and 3 um or less.

### [Frame]

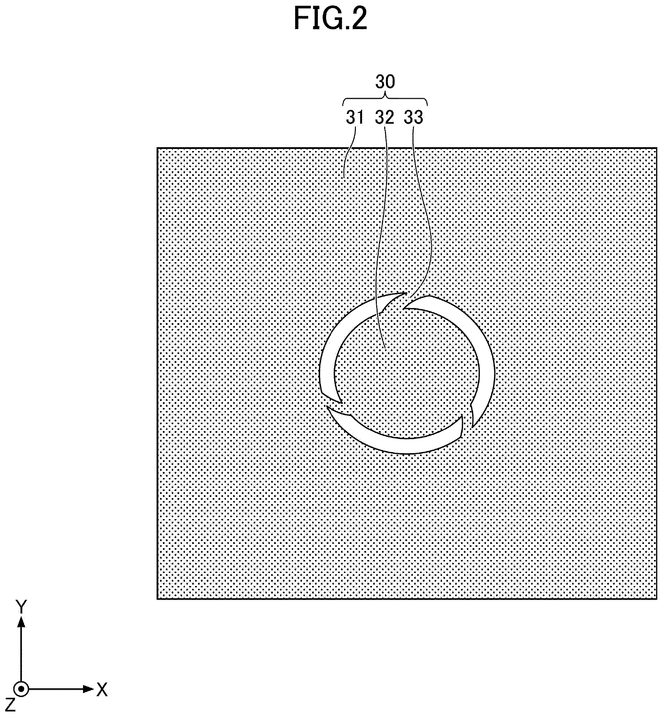

The frame 30 may be interposed between the glass layer 70 and the switch portion 80. In an example illustrated in FIG. 1, the frame 30 is bonded onto the support 10 via the bonding layer 20. FIG. 2 is a plan view illustrating the frame as an example. As illustrated in FIG. 2, the frame 30 includes a fixed portion 31 and a movable portion 32 supported by an elastic support 33 relative to the fixed portion 31. The fixed portion 31 includes an opening and a movable portion 32 is arranged in the opening. The fixed portion 31 and the movable portion 32 are movably supported by a plurality of the elastic supports 33. Note that only the fixed portion 31 is bonded to the support 10, and the movable portion 32 and the elastic support 33 are not bonded to the support 10.

In the example as illustrated in FIG. 2, a circular opening is formed substantially in the center of the fixed portion 31 having a rectangular shape, and the movable portion 32 having a circular shape is arranged in the opening. The diameter of the movable portion 32 may be, for example, about 10 mm to 30 mm. In the example as illustrated in FIG. 2, three elastic supports 33 are arranged at positions that approximately divide the circumferential direction of the movable portion 32 into three equal portions. However, the shapes of the fixed portion 31 and the movable portion 32, and the number and positions at which the elastic supports 33 are connected are not limited to the example as illustrated in FIG. 2. The elastic supports 33 are, for example, springs. The springs may be leaf springs or coil springs. The elastic support 33 may be a component formed of other than a spring, such as rubber.

The frame 30 can be integrally formed of, for example, a resin or a metal. When the frame 30 is formed of a resin, for example, materials such as an ABS resin, a vinyl chloride resin, a polypropylene resin, a polycarbonate resin, and a polystyrene resin can be used. When the frame 30 is formed of a metal, for example, materials such as aluminum and SUS can be used. The thickness of the frame 30 can be, for example, 0.5 mm or more and 5 mm or less.

### [Resin layer]

The resin layer 50 can be interposed between the glass layer 70 and the switch portion 80. In the example illustrated in FIG. 1, the resin layer 50 is bonded onto the fixed portion 31 of the frame 30 via the bonding layer 40. The resin layer 50 is flexible. The thickness of the resin layer 50 is preferably 50 um or more to 150 um from the viewpoint of flexibility. The material of the resin layer 50 includes, for example, a polyester resin such as a polyethylene terephthalate resin or a polyethylene naphthalate resin, a cycloolefin resin such as a norbornene resin, a polyethersulfone resin, a polycarbonate resin, an acrylic resin, a polyolefin resin, a polyimide resin, a polyamide resin, a polyimide amide resin, a polyarylate resin, a polysulfone resin, a polyetherimide resin, a urethane resin, and the like.

As described above, when the resin layer 50 is stacked on a layer lower than the glass layer 70, the resin layer 50 has an effect of suppressing deformation of the glass layer 70 to an extent of an unrequired level, and suppressing cracking of the glass layer 70. Also, durability of the glass layer 70, that is deformed elastically and repeatedly, can be improved by realizing a deformation amount to an appropriate level. By changing the thickness of the resin layer 50, the amount of deformation of the glass layer 70 can be controlled.

A plurality of resin layers may be stacked on the layer lower than the glass layer 70 through a bonding layer. With such a stacking structure, cracking of the glass layer 70 can be further suppressed, and durability of the glass layer 70 when it is repeatedly and elastically deformed can be further improved.

### [Glass layer]

The glass layer 70 is stacked on the resin layer 50 via the bonding layer 60. The glass layer 70 is made of tempered glass. The tempered glass may be chemically tempered glass or thermally tempered glass, but chemically tempered glass including a compressive stress layer is easier to produce than thermally tempered glass. The compressive stress of the glass layer 70 is preferably 600 MPa or more.

Chemical strengthening is replacement of ions near the surface of the glass plate with ions having a large ionic radius. By ion exchange, a compressive stress layer is formed on the surface of the glass plate, resulting in chemically strengthened glass. The glass composition in the compressive stress layer is different from the glass composition of the interior glass.

As to the chemically strengthened glass, for example, soda lime glass, aluminosilicate glass, borosilicate glass, alumino-borosilicate glass, or the like can be used as a glass plate before strengthening. On the point of the depth of the compressive stress layer not becoming deeper than required, the soda lime glass or the soda silicate glass is preferable.

The ion exchange can be performed, for example, by replacing Li ions on the surface of the glass plate with Na ions and/or K ions. Alternatively, Na ions on the surface of the glass plate may be replaced with K ions. These ion exchanges create a compressive stress layer on the surface of the glass plate.

To replace Na ions with K ions, for example, a glass plate containing sodium may be brought into contact with an inorganic molten salt containing potassium nitrate. The inorganic molten salt containing potassium nitrate preferably contains at least one type of salt selected from a group consisting of K₂CO₃, Na₂CO₃, KHCO₃, NaHCO₃, KOH, or NaOH.

The thickness of the glass layer 70 is preferably 100 um or more, considering the strength and durability of the glass layer required for the switch device. On the other hand, the glass layer used for the switch device needs to be elastically deformed, and from the viewpoint of sufficient elastic deformation, the thickness of the glass layer 70 is preferably 200 um or less.

A functional layer such as an antifouling layer, an antireflection layer, a conductive layer, a reflection layer, and a decoration layer may be provided on the top surface and/or the back surface of the glass layer 70. In the switch device according to the present embodiment, the glass layer 70 is located on the outermost top surface. Here, "the glass layer 70 is located on the outermost top surface" means that the glass layer 70 is substantially located on the outermost top surface, and even when an additional layer as described above is provided, in the present embodiment, the glass layer 70 is expressed as being located on the outermost surface.

### [Switch portion]

The switch portion 80 is arranged toward the back surface of the glass layer 70. In the example of FIG. 1, the switch portion 80 is arranged inside the support 10 and on the opposite side of the glass layer 70 or the like of the frame 30.

The switch portion 80 includes a plurality of contacts including a contact that is configured to move vertically. In the example illustrated in FIG. 1, the switch portion 80 is a tact switch and includes a housing 81, a film 82, a frame 83, a stem 84, a first contact 85, and a second contact 86. Among the first contact 85 and the second contact 86, the second contact 86 is a contact that can move vertically.

The housing 81 and the frame 83 are each in the shape of a box, and are arranged opposite to each other across the film 82 that is adhesive. The film 82 is arranged, for example, so as to close an opening of the housing 81. The stem 84 is held in the frame 83 in a state slidable in a vertical direction.

A first contact 85 and a second contact 86 are arranged at the bottom of the housing 81. The second contact 86 is arranged above the first contact 85 apart from the first contact 85. The film 82 and the second contact 86 are elastically deformable. The housing 81, the film 82, the frame 83, and the stem 84 are, for example, made of resin.

In FIG. 1, an external connection terminal electrically connected to the first contact 85 and the second contact 86 is not illustrated. There is a gap of about 0.1 mm to about 0.2 mm between an upper surface of the stem 84 of the switch portion 80 and a lower surface of the movable portion 32 of the frame 30. The switch portion 80 is not limited to a tact switch and may be a membrane switch or the like.

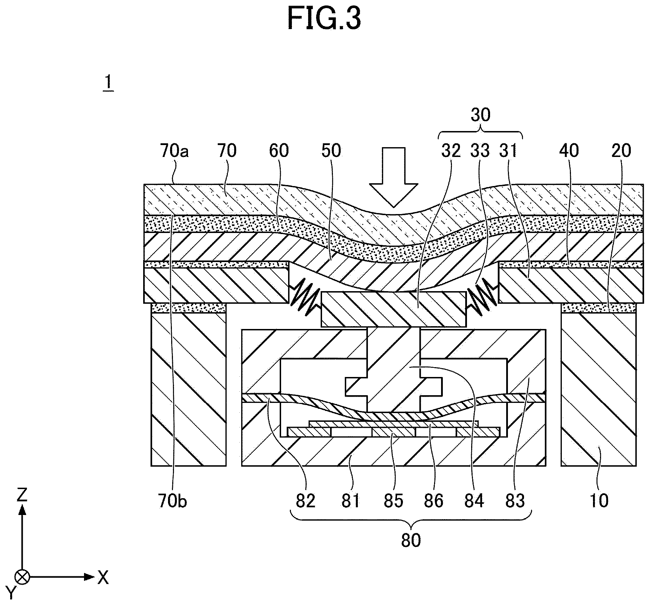

FIG. 3 is a cross-sectional view (No. 2) illustrating the switch device according to the first embodiment, illustrating that one surface 70a of the glass layer 70 is pressed in an arrow direction.

As described above, the thickness of the glass layer 70 is preferably 100 um or more and 200 um or less. By making the glass layer 70 have such a thickness, the glass layer 70 can be elastically deformed and can be locally recessed. When one surface 70a of the glass layer 70 is pressed, the glass layer 70 together with the resin layer 50 and the bonding layer 60 elastically deforms to move the movable portion 32 of the frame 30. Thus, the contact (in a conductive state) and non-contact (in a non-conductive state) of the first contact 85 and the second contact 86 of the switch portion 80 are switched. The glass layer 70 can elastically deform so as to sink in a vertical direction by about 0.5 mm to 2 mm, for example.

In the example illustrated in FIG. 1, when the glass layer 70 is not pressed, the first contact 85 and the second contact 86 of the switch portion 80 do not contact with each other (in a non-conductive state). Therefore, as illustrated in FIG. 3, when the glass layer 70 is pressed and deformed, the stem 84 of the switch portion 80 is pressed, and the film 82 and the second contact 86 are elastically deformed so that the second contact 86 approaches the first contact 85, and the first contact 85 and the second contact 86 come into contact with each other and become conductive. When the force to press the glass layer 70 is removed, the glass layer 70 returns to the state as illustrated in FIG. 1, and the first contact 85 and the second contact 86 are made non-contact again.

In this way, by making the glass layer 70 have a thickness of 100 um or more and 200 um or less, the glass layer 70 becomes elastically deformable. As a result, when the glass layer 70 is pressed, the contacts of the switch portion 80 are slid vertically according to the local deformation of the glass layer 70, and conduction and non-conduction of a plurality of contacts of the switch portion 80 can be switched.

Since the outermost top surface of the switch device 1 is a glass layer 70, scratch resistance, solvent cleanability, and texture can be enhanced compared with a case where the outermost top surface is a resin. Moreover, since the glass layer 70 is tempered glass, the switch device 1 can have sufficient strength and durability as compared with a case where the glass layer 70 is untempered glass. Moreover, since the switch device 1 is a sliding-type switch, a feeling of pressing can be obtained and a risk of causing misoperation can be reduced.

As a switch using glass at the outermost top surface, a type using a capacitance or the like can be considered, but it is difficult to realize a vertical-sliding motion with ordinary flat glass. Therefore, an operator cannot obtain a touch feeling and there is a risk of causing misoperation by unintentionally touching the switch.

### [Example 1]

In Example 1, a switch device having the structure as illustrated in FIG. 1 was fabricated. A chemically tempered glass having a compressive stress of 600 MPa was used as the glass layer 70, and the thickness of the glass layer was 200 um. The resin layer 50 was made of PET and had a thickness of 100 um. The bonding layer 60 was a bonding agent made of an epoxy resin, and had a thickness of 1 um.

### [Example 2]

In Example 2, a chemically tempered glass having a compressive stress of 600 MPa was used as the glass layer 70, and the thickness of the glass layer was 150 um. Otherwise, a switch device was fabricated in the same manner as in Example 1.

### [Example 3]

In Example 2, a chemically tempered glass having a compressive stress of 600 MPa was used as the glass layer 70, and the thickness of the glass layer was 100 um. Otherwise, a switch device was fabricated in the same manner as in Example 1.

### [Comparative Example 1]

In Comparative Example 1, a chemically tempered glass having a compressive stress of 600 MPa was used as the glass layer 70, and the thickness of the glass layer was 300 um. Otherwise, a switch device was fabricated in the same manner as in Example 1.

### [Comparative Example 2]

In Comparative Example 2, a chemically tempered glass having a compressive stress of 600 MPa was used as the glass layer 70, and the thickness of the glass layer was 50 um. Otherwise, a switch device was fabricated in the same manner as in Example 1.

### [Comparative Example 3]

In Comparative Example 3, untempered glass was used as the glass layer 70, and the thickness of the glass layer was 200 um. Otherwise, a switch device was fabricated in the same manner as in Example 1.

### [Comparative Example 4]

In Comparative Example 4, untempered glass was used as the glass layer 70, and the thickness of the glass layer was 100 um. Otherwise, a switch device was fabricated in the same manner as in Example 1.

### [Evaluation 1]

With respect to the switch devices fabricated in Examples 1 to 3 and Comparative Examples 1 to 4, whether or not the glass layer 70 can be elastically deformed to press the switch portion 80 when the glass layer 70 is pressed was confirmed. Specifically, whether or not the switch portion 80 can be switched from in a non-conductive state to in a conductive state when the switch portion 80 is pressed, in a direction of an arrow illustrated in FIG. 3, from the side of the glass layer 70 by a load of 5 N was confirmed. The case where the switch portion 80 was switched to a conductive state was "YES", and the case where the switch portion 80 was not switched to a conductive state was "NO".

### [Evaluation 2]

A strength test was conducted on the switch devices fabricated in Examples 1 to 3 and Comparative Examples 1 to 4. Whether or not the glass layer 70 was cracked was visually confirmed. The case where a crack could not be confirmed was "GOOD", and the case where a crack could be confirmed was "POOR". The strength test was conducted in accordance with the spring hammer test specified in JIS C4526-1:2021. The force applied to the switch device by the spring hammer test was 0.5 J.

### [Evaluation result]

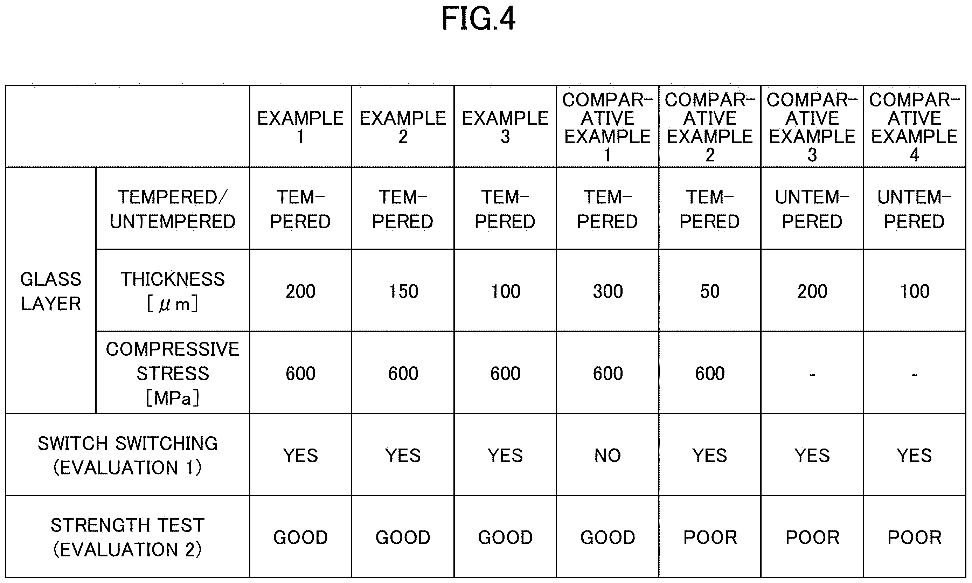

The evaluation results are as summarized in FIG. 4. From Examples 1 to 3 as summarized in FIG. 4, it was confirmed that by using chemically strengthened glass with a compressive stress of 600 MPa as the glass layer 70, and by having a thickness of 100 um or more and 200 um or less, the switch portion can be switched between being in a conductive state and in a non-conductive state, and that sufficient strength can be obtained.

On the other hand, it was confirmed from Comparative Example 1 that even when a chemically strengthened glass having a compressive stress of 600 MPa is used as the glass layer 70, when the thickness of the glass layer is 300 um, the strength thereof is too high such that the glass layer cannot be elastically deformed. Thus, switching of the switch portion between being in a conductive state and in a non-conductive state cannot be performed. Also, from Comparative Example 2, it was confirmed that even when a chemically strengthened glass having a compressive stress of 600 MPa is used as the glass layer 70, sufficient glass strength cannot be obtained when the thickness of the glass layer is 50 um. Furthermore, from Comparative Examples 3 and 4, it was confirmed that sufficient glass strength cannot be obtained, even when the thickness is 100 um or 200 um, when an untempered glass is used as the glass layer 70.

Although the preferred embodiments and the like have been described in detail above, the present invention is not limited to the embodiments described above. Various modifications and substitutions can be made to the above-described embodiments and the like without departing from the scope described in claims.

The present international application is based on and claims priority to Japanese Patent Application No. 2022-029745 filed on February 28, 2022, and the entire contents of Japanese Patent Application No. 2022-029745 are incorporated into the present international application by reference.

### REFERENCE SIGNS LIST

- 1: Switch device
- 10: Support
- 20,40,60: Bonding layer
- 30: Frame
- 31: Fixed portion
- 32: Movable portion
- 33: Elastic support
- 50: Resin layer
- 70: Glass layer
- 70a: One surface
- 70b: Other surface
- 80: Switch portion
- 81: Housing
- 82: Film
- 83: Frame
- 84: Stem
- 85: First contact
- 86: Second contact

## Claims

1. A switch device, comprising:
a glass layer made of tempered glass; and
a switch portion arranged at a back surface of the glass layer, wherein
a thickness of the glass layer is 100 um or more and 200 um or less,
the switch portion includes a plurality of contacts that include a vertically movable contact, and
in response to pressing of the glass layer, the glass layer elastically deforms, thereby performing switching of the plurality of contacts between being in a conductive state and in a non-conductive state.

2. The switch device according to claim 1, wherein
the glass layer is a chemically tempered glass including a compressive stress layer.

3. The switch device according to claim 2, wherein
a compressive stress of the glass layer is 600 MPa or more.

4. The switch device according to any one of claims 1 to 3, wherein
a frame is interposed between the glass layer and the switch portion,
the frame includes a fixed portion and a movable portion that is supported by an elastic support relative to the fixed portion, and
in response to pressing of the glass layer, the glass layer elastically deforms to move the movable portion, thereby performing switching of the plurality of contacts between being in the conductive state and in the non-conductive state.

5. The switch device according to any one of claims 1 to 4, wherein
a support configured to support the glass layer is included at a back surface of the glass layer.

6. The switch device according to claim 5, wherein
the support is a part of or all of the switch portion.

7. The switch device according to claim 5 or 6, wherein
the support is arranged outside the switch portion.

8. The switch device according to any one of claims 1 to 7, wherein
a bonding layer is interposed between the glass layer and the switch portion.

9. The switch device according to any one of claims 1 to 8, wherein
a resin layer is interposed between the glass layer and the switch portion.
